# EUROPÄISCHE PATENTSCHRIFT

(11) **EP 3 093 628 B1**
(45) Veröffentlichungstag und Bekanntmachung des Hinweises auf die Patenterteilung: **27.05.2020**
(21) Anmeldenummer: 15167652.5
(22) Anmeldetag: 13.05.2015
(51) Int. Cl.: G01F 25/00, G01F 23/288, G01N 9/24

(54) **ALTERUNGSKOMPENSATION UND TEMPERATURKOMPENSATION EINES PHOTOMULTIPLIERS IN EINEM RADIOMETRISCHEN MESSGERÄT MIT SZINTILLATORANORDNUNG**
AGING COMPENSATION AND TEMPERATURE COMPENSATION OF A PHOTOMULTIPLIER IN A RADIOMETRIC MEASURING DEVICE WITH SCINTILLATOR ASSEMBLY
COMPENSATION DE LA TEMPÉRATURE ET DU VIEILLISSEMENT D'UN PHOTOMULTIPLICATEUR DANS UN APPAREIL DE MESURE RADIOMÉTRIQUE DOTÉ D'UN SYSTÈME DE SCINTILLATEUR

(43) Veröffentlichungstag der Anmeldung: 16.11.2016
(73) Patentinhaber: VEGA Grieshaber KG, 77709 Wolfach (DE)
(72) Erfinder: Harter, Matthias, 77773 Schenkenzell (DE)
(74) Vertreter: Maiwald Patent- und Rechtsanwaltsgesellschaft mbH

(56) Entgegenhaltungen:
- EP-A1- 2 194 362
- EP-A1- 2 378 312
- DE-A1- 10 132 267
- DE-A1-102009 001 641

## Beschreibung

### Gebiet der Erfindung

Die Erfindung betrifft die radiometrische Füllstandmessung. Insbesondere betrifft die Erfindung Füllstandmessgeräte zur radiometrischen Füll- bzw. Grenzstandmessung oder zur Messung von Dichte oder Massenstrom, sowie ein Verfahren zur Füllstandmessung in einem Behälter, ein Programmelement und ein computerlesbares Medium.

### Hintergrund

Zur Messung des Füllstands einer Flüssigkeit in einem Behälter können radiometrische Füllstandmessgeräte verwendet werden. Zur radiometrischen Füllstandmessung wird eine Kombination aus einem Sendeelement und einem radiometrischen Füllstandmessgerät verwendet. Das Sendeelement wird an einer Behälteraußenwand angeordnet und strahlt ein radioaktives Signal in Richtung des Behälters ab, wobei sich im Behälterinneren ein Füllgut, beispielsweise eine Flüssigkeit, mit einer bestimmten Füllhöhe befinden kann. Die im Sendeelement verwendete radioaktive Substanz ist typischerweise ein Gammastrahler. An der dem Sendeelement gegenüber angeordneten Behälteraußenwand wird ein radiometrisches Füllstandmessgerät angebracht. Dieses Messgerät detektiert den Anteil der durch das Sendeelement in Richtung des Behälters ausgesandten Strahlung, der durch die Behälterwände, die umgebende Luft sowie das Füllgut bis zum Füllstandmessgerät transmittiert wird und wertet diesen Anteil aus. In Abhängigkeit der Dichte des Füllguts, beispielsweise einer Flüssigkeit, in dem Behälter sowie der Füllhöhe des Füllguts wird nur ein gewisser Anteil der ausgesandten radioaktiven Strahlung transmittiert und kann durch das radiometrische Füllstandmessgerät detektiert werden. Auf Grundlage der gemessenen Zählrate, die ein Maß für die ankommende radioaktive Strahlung ist, kann durch das radiometrische Füllstandmessgerät dann die Füllhöhe ermittelt werden.

Radiometrische Füllstandmessgeräte weisen einen Szintillator auf, auf den die durch das Sendeelement ausgesandten und bis zum Füllstandmessgerät transmittierten Gammastrahlen auftreffen können, und der die empfangenen Gammastrahlen in Lichtsignale umwandelt. An den Szintillator angeschlossen ist ein Photonenzähler, der die im Szintillator produzierte Lichtmenge in einen elektrischen Puls umwandelt. Dieser elektrische Puls kann durch eine Auswerteeinheit des Füllstandmessgeräts ausgewertet werden und ist ein Maß für die am Szintillator detektierte radioaktive Strahlung. Als der nach dem Szintillator geschaltete Photonenzähler kann beispielsweise ein Photomultiplier zum Einsatz kommen. Solche Photomultiplier können alterungs- oder temperaturbedingte Änderungen aufweisen, aufgrund derer das durch den Photomultiplier produzierte Messsignal, das in der Auswerteeinheit des Füllstandmessgeräts weiterverarbeitet wird, instabil und ungenau wird.

Aus der DE 10 2009 001641 A1 ist eine radiometrische Messeinrichtung bekannt, die einen radioaktiven Emitter aufweist, welcher im Betrieb radioaktive Strahlung in Richtung eines Containers aussendet. Zwei Detektoren detektieren eine korrespondierende durch den Container dringenden Strahlungsintensität als eine Funktion des zu messenden physikalischen Parameters, und wandeln den Parameter in ein elektrisches Ausgabesignal um.

DE 101 32267 A1 zeigt einen Photonendetektor zur Füllstands- oder Dichtemessung in einem Container mit einer Übertragungseinheit und einer stabförmigen Empfangseinheit zum Empfang radioaktiver Strahlung, wobei die Empfangseinheit an jedem ihrer beiden Enden jeweils eine Detektoreinheit aufweist. Durch eine Recheneinheit wird die Zeitdifferenz zwischen dem Eintreffen eines Messimpulses, welcher durch ein Photon erzeugt wurde, in den beiden Detektoreinheiten ermittelt. Des Weiteren ermittelt die Recheneinheit die Pulsbreite und die Amplitude jedes Messimpulses. Die Recheneinheit korrigiert die gemessene Zeitdifferenz auf Basis der berechneten Werte. Aus einer Anzahl von korrigierten Messimpulsen wird ein Intensitätsprofil entlang der Empfangseinheit abgeleitet, sowie von letzterem der Füllstand in dem Container.

### Zusammenfassung der Erfindung

Es ist eine Aufgabe der vorliegenden Erfindung, ein verbessertes radiometrisches Füllstandmessgerät anzugeben, dass Alterungs- oder Temperatureffekten eines Photomultipliers Rechnung trägt, so dass eine größere Messgenauigkeit und Messstabilität erzielt wird.

Diese Aufgabe wird durch die Gegenstände der unabhängigen Ansprüche gelöst. Weitere Ausführungsformen der Erfindung ergeben sich aus den abhängigen Ansprüchen und aus der folgenden Beschreibung.

Gemäß einem Aspekt der Erfindung wird ein Füllstandmessgerät zur radiometrischen Füllstandmessung vorgeschlagen, das eine Szintillatoranordnung aufweist, sowie einen ersten und einen zweiten Photonenzähler, welche die von der Szintillatoranordnung erzeugten Photonen zählen, einen Vergleicher und eine Auswerteeinheit. Beispielsweise weist der Vergleicher eine Prozessoreinheit (Mikrokontroller) oder ein FPGA (Field Programmable Gate Array) auf. Der Vergleicher ist dazu vorgesehen, die mit dem ersten und dem zweiten Photonenzähler erzeugten Messsignale miteinander zu vergleichen. Auf diese Weise kann eine alterungs- oder temperaturbedingte Änderung der von dem ersten Photonenzähler erzeugten Messsignale festgestellt werden. Die Auswerteeinheit kann zum Auswerten der durch den ersten Photonenzähler erzeugten Messsignale ausgeführt sein, wobei das Auswerten unter Berücksichtigung der festgestellten alterungs- oder temperaturbedingten Änderung erfolgen kann.

Unter einer Berücksichtigung eines Alterungs- oder Temperatureffektes und einer damit verbundenen alterungs- oder temperaturbedingten Änderung ist zu verstehen, dass erfindungsgemäß aus dem Vergleich der Messsignale, die mit dem ersten und dem zweiten Photonenzähler erzeugt werden, ein Korrekturfaktor für den ersten Photonenzähler ermittelt wird und die Auswertung unter Berücksichtigung des Korrekturfaktors, der eine alterungs- oder temperaturbedingten Änderung kompensiert, durchgeführt wird. Weitere Möglichkeiten der Berücksichtigung einer festgestellten alterungs- oder temperaturbedingten Änderung ergeben sich auch aus der nachfolgenden Beschreibung.

Der zweite Photonenzähler kann der Erzeugung eines Referenzmesssignals dienen, das mit dem Messsignal des ersten Photonenzählers verglichen werden kann, um einen alterungs- oder temperaturbedingten Änderungseffekt im Messsignal des ersten Photonenzählers zu ermitteln. Gemäß einem Ausführungsbeispiel der Erfindung wird das Messsignal des zweiten Photonenzählers nicht an die Auswerteeinheit weitergegeben. Es kann jedoch auch vorgesehen sein, dass die durch den zweiten Photonenzähler erzeugten Messsignale zur weiteren Auswertung und insbesondere zur Ermittlung eines Füllstands an die Auswerteeinheit übermittelt werden.

Gemäß einer Ausführungsform der Erfindung ist der zweite Photonenzähler temperaturstabil. Die Wahl eines temperaturstabilen zweiten Photonenzählers kann sicherstellen, dass mit dem durch den zweiten Photonenzähler erzeugten Messsignal eine temperaturbedingte Änderung des Messsignals des ersten Photonenzählers festgestellt werden kann. Unter temperaturstabil ist in diesem Zusammenhang zu verstehen, dass die durch den zweiten Photonenzähler erhaltenen Messsignale über den Temperaturbereich, der in einer typischen Messumgebung vorliegt, stabil und reproduzierbar sind.

Gemäß einer Ausführungsform der Erfindung kann der erste Photonenzähler als ein Photomultiplier ausgelegt sein.

Gemäß einer weiteren Ausführungsform kann der zweite Photomultiplier durch eine Avalanche-Photodiode gegeben sein.

Gemäß einer weiteren Ausführungsform wird ein Füllstandmessgerät vorgeschlagen, dessen Szintillatoranordnung zwei Szintillatoren aufweist, wobei der erste Photonenzähler dazu ausgeführt ist, die Lichtsignale, die im ersten Szintillator produziert werden, zu empfangen und der zweite Photonenzähler dazu ausgelegt ist, die im zweiten Szintillator erzeugten Lichtsignale zu empfangen.

Gemäß einer weiteren Ausfuhrungsform kann das radiometrische Füllstandmessgerät derart ausgelegt sein, dass die Szintillatoranordnung nur einen Szintillator aufweist und der erste und der zweite Photonenzähler die Lichtsignale dieses einen Szintillators empfangen.

Erfindungsgemäß weist das radiometrische Füllstandmessgerät weiterhin ein Netzteil auf, das zum Bereitstellen der Versorgungsspannung des ersten Photonenzählers dient und das durch eine Steuereinheit, bei der es sich beispielsweise um den Vergleicher oder aber um ein weiteres Steuerelement, zum Beispiel einen zweiten Mikrocontroller, des Füllstandmessgeräts handeln kann, angesteuert werden kann. Dabei ist die Steuereinheit dazu ausgeführt, die durch das Netzteil bereitgestellte Versorgungsspannung des ersten Photonenzählers zu variieren, wenn im Vergleich der durch den ersten und den zweiten Photonenzähler erzeugten Messsignale eine temperatur- oder alterungsbedingte Änderung der Messsignale des ersten Photonenzählers festgestellt wurde. Falls die Steuereinheit als ein vom Vergleicher verschiedenes Element des Füllstandmessgeräts ausgeführt ist, kann vorgesehen sein, dass der Vergleicher zunächst auf den Vergleich der Messdaten des ersten und des zweiten Photonenzählers bezogene Daten oder Informationen an die Steuereinheit übermittelt und die Steuereinheit auf Grundlage der Daten anschließend die Versorgungsspannung des ersten Photonenzählers variiert.

Die Änderung der Versorgungsspannung des ersten Photonenzählers kann in diesem Fall so lange erfolgen, bis der Vergleich der durch den ersten und den zweiten Photonenzähler erzeugten Messsignale eine Übereinstimmung der Messsignale ergibt oder ein vorbestimmter Sollwert erreicht ist. Dabei kann ein Sollwert beispielsweise ein vorgegebenes Verhältnis zwischen dem mit dem ersten und dem mit dem zweiten Photonenzähler erzeugten Messsignale sein. Es kann zusätzlich auch ein Toleranz-Intervall angegeben sein, innerhalb dessen das Verhältnis der erzeugten Messwerte liegen soll. Erfindungsgemäß kann durch eine geeignete Änderung der Versorgungsspannung eine alterungs- oder temperaturbedingte Änderung der durch den ersten Photonenzähler erzeugten Messsignale kompensiert werden.

Es kann beispielsweise eine Eingabevorrichtung an den Vergleicher angeschlossen sein, in die ein gewünschtes Verhältnis der Messsignale, oder ein Intervall, innerhalb dessen das Verhältnis der Messsignale liegen soll, eingegeben werden kann. Die beschriebene Eingabevorrichtung kann auch direkt Teil des Vergleichers sein.

Eine Eingabevorrichtung ermöglicht beispielsweise auch eine Neueichung eines radiometrischen Füllstandmessgeräts, die zum Beispiel bei einer Auswechslung eines der beiden Photonenzähler notwendig sein kann. Zum Beispiel kann einer der Photonenzähler des radiometrischen Füllstandmessgeräts durch einen anderen Photonenzähler ausgewechselt werden. Der eingewechselte Photonenzähler kann beispielsweise ein Messsignal erzeugen, dass sich von dem durch den ausgewechselten Photonenzähler erzeugten Messsignal in der Intensität unterscheidet. Es kann vorgesehen sein, dass entsprechende auf die Empfindlichkeit und/oder den Typ des Photonenzählers bezogene Daten in die Eingabevorrichtung eingegeben werden können. Es kann auch vorgesehen sein, dass beispielsweise ein Sollwert oder ein Toleranz-Intervall für das Verhältnis der mit dem ersten und dem zweiten Photonenzähler ermittelten Messsignale direkt in die Eingabevorrichtung eingegeben werden kann.

Gemäß einer weiteren Ausführungsform der Erfindung kann der Vergleicher des Füllstandmessgeräts dazu ausgeführt sein, aus dem Vergleich des durch den ersten und den zweiten Photonenzähler erfassten Messsignals einen Korrekturfaktor zu ermitteln. Der Vergleicher kann weiter dazu ausgeführt sein, diesen Korrekturfaktor zur weiteren Auswertung des durch den ersten Photonenzähler erfassten Messsignals an die Auswerteeinheit zu übergeben.

Ein weiterer Aspekt der Erfindung betrifft ein Verfahren zur radiometrischen Füllstandmessung. Gemäß diesem Verfahren werden zur Messung des Füllstands in einem Behälter die folgenden Schritte ausgeführt. Ein durch eine radioaktive Quelle ausgesandtes Signal wird durch eine Szintillatoranordnung eines Füllstandmessgeräts empfangen. Im nächsten Schritt werden die empfangenen Signale durch die Szintillatoranordnung in Lichtsignale umgewandelt. Diese Lichtsignale werden durch einen ersten und einen zweiten Photonenzähler empfangen. Die aus den Lichtsignalen der Szintillatoranordnung durch den ersten und den zweiten Photonenzähler erzeugten Messsignale werden miteinander verglichen. Auf diese Weise kann eine alterungs- oder temperaturbedingte Änderung der von dem ersten Photonenzähler erzeugten Messsignale festgestellt werden. Im nächsten Schritt werden die durch den ersten Photonenzähler erzeugten Messsignale unter Berücksichtigung der festgestellten alterungs- oder temperaturbedingten Änderung ausgewertet.

Wie oben und/oder im Folgenden beschrieben ist unter der Berücksichtigung der alterungs- oder temperaturbedingten Änderung des durch den ersten Photonenzähler erzeugten Messsignals zu verstehen, dass eine Steuerung, beispielsweise der Vergleicher oder eine weitere Steuereinrichtung des Füllstandmessgeräts, das Netzteil des ersten Photonenzählers ansteuern kann und die Versorgungsspannung dieses ersten Photonenzählers derart regeln kann, dass das durch den ersten Photonenzähler erzeugte Messsignal wieder einen vorgegebenen Sollwert einnimmt. Es kann auf der anderen Seite auch vorgesehen sein, dass ein Korrekturfaktor aus dem Vergleich der durch den ersten und den zweiten Photonenzähler erhaltenen Messsignale berechnet wird und dieser zur Auswertung an die Auswerteeinheit weitergegeben wird. In diesem Fall wird der Korrekturfaktor in der Auswertung des durch den ersten Photonenzähler erzeugten Messsignals berücksichtigt.

An dieser Stelle sei daraufhingewiesen, dass die oben und/oder im Folgenden beschriebenen Verfahrensschritte durch das Füllstandmessgerät ausgeführt werden können, und das im Gegenzug sämtliche oben und/oder im Folgenden beschriebenen Vorrichtungsmerkmale auch in das Verfahren implementiert werden können.

Gemäß einer weiteren Ausführungsform erfolgt die Auswertung im oben beschriebenen Verfahren unter Befolgung der im Folgenden beschriebenen Schritte. Änderung der Versorgungsspannung, die durch ein Netzteil dem ersten Photonenzähler zur Verfügung gestellt wird, wobei die Änderung so lange erfolgt, bis die Messsignale, die durch den ersten und den zweiten Photonenzähler erhalten werden, übereinstimmen, ein bestimmtes Sollverhältnis zueinander besitzen oder innerhalb eines Toleranz-Intervalls zu liegen kommen. Anschließend werden die durch den ersten Photonenzähler erzeugten Messsignale durch eine Auswerteeinheit ausgewertet. In diesem Fall ist es nicht notwendig, einen Korrekturfaktor an die Auswerteeinheit zu übermitteln.

Es kann aber auch vorgesehen sein, dass der Vergleicher zur Änderung der Versorgungsspannung des ersten Photonenzählers ausgeführt ist und einen Korrekturfaktor an die Auswerteeinheit übermitteln kann. Eine solche Ausführungsform erlaubt es, eine alterungs- oder temperaturbedingte Änderung des durch den ersten Photonenzähler erzeugten Messsignals zunächst durch Änderung der Versorgungsspannung des ersten Photonenzählers zu kompensieren. Wenn diese Kompensation nicht ausreicht, kann die durch den Vergleich des durch den ersten und den zweiten Photonenzähler erzeugten Messsignals erhaltene Abweichung in Form eines Korrekturfaktors an die Auswerteeinheit übermittelt werden.

Gemäß einer weiteren Ausführungsform weist die Auswertung des oben beschriebenen Verfahrens die folgenden Schritte auf. Ermitteln eines Korrekturfaktors für die durch den ersten Photonenzähler erzeugten Messsignale, wobei dieser Korrekturfaktor aus dem Vergleich der durch den ersten und den zweiten Photonenzähler erzeugten Messsignale errechnet wird. Im nächsten Schritt wird der Korrekturfaktor an eine Auswerteeinheit übermittelt und das durch den ersten Photonenzähler erzeugte Messsignal wird unter Berücksichtigung des Korrekturfaktors durch die Auswerteeinheit ausgewertet.

Gemäß einem weiteren Aspekt der Erfindung wird ein Programmelement vorgeschlagen, das auf einem Prozessor eines Füllstandmessgeräts ausgeführt werden kann und das Füllstandmessgerät anleitet, die Schritte nach Anspruch 8 durchzuführen.

Gemäß einem weiteren Aspekt der Erfindung ist ein computerlesbares Medium angegeben, auf dem ein oben beschriebenes Programmelement gespeichert ist. Kurze Beschreibung der Figuren
- Fig. 1: zeigt ein Beispiel für ein radiometrisches Füllstandmessgerät, das an einer Außenseite eines Behälters angebracht ist.
- Fig. 2: zeigt ein Beispiel für ein radiometrisches Füllstandmessgerät mit einem Szintillator und zwei Photonenzählern.
- Fig. 3: zeigt ein Beispiel für ein radiometrisches Füllstandmessgerät mit zwei Photonenzählern und einem Schalter, der es erlaubt, entweder das durch den ersten oder das durch den zweiten Photonenzähler erzeugte Messsignal zur Füllstandmessung zu verwenden.
- Fig. 4: zeigt ein Beispiel für ein radiometrisches Füllstandmessgerät mit zwei Szintillatoren und zwei Photonenzählern.
- Fig. 5: zeigt ein Beispiel für ein radiometrisches Füllstandmessgerät mit zwei Photonenzählem, wobei der Vergleicher mit einer Eingabevorrichtung verbunden ist.
- Fig. 6: zeigt ein radiometrisches Füllstandmessgerät, bei dem der Vergleicher weiter an einen Speicher angeschlossen ist.
- Fig. 7: zeigt ein Flussdiagramm eines Auswerteverfahrens zur Bestimmung des Füllstands in einem Behälter mittels eines radiometrischen Füllstandmessgeräts mit zwei Photomultipliern.

Die Zeichnungen sind lediglich schematisch und nicht maßstabsgetreu. Gleiche Bezugszeichen beschreiben gleiche oder ähnliche Teile.

### Detaillierte Beschreibung von Ausführungsbeispielen

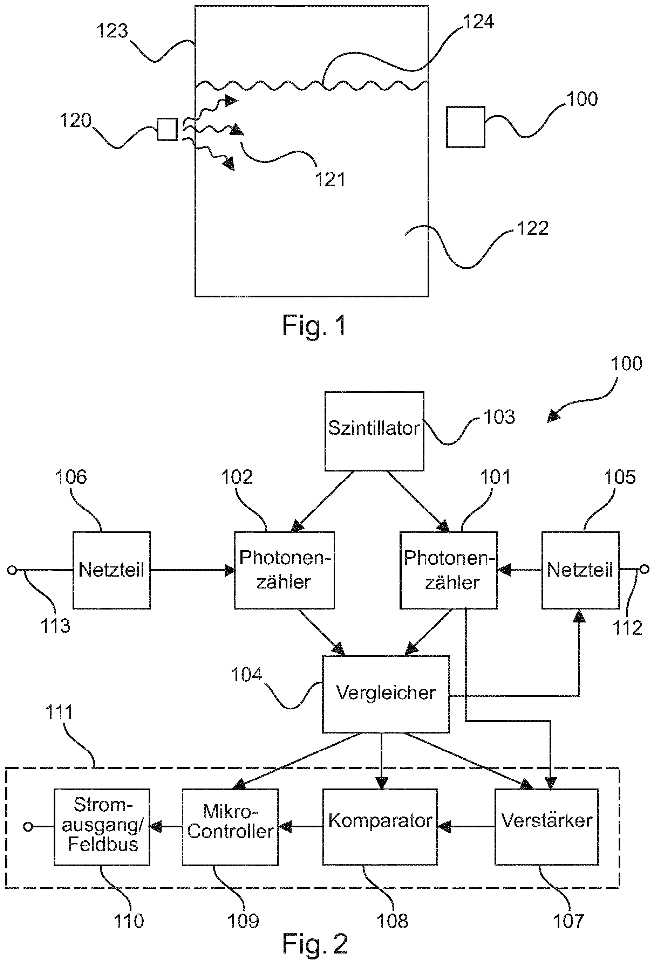

Fig. 1 zeigt ein radiometrisches Füllstandmessgerät 100, das an einer Außenseite eines Behälters 123 angebracht ist. Im Behälter befindet sich eine Flüssigkeit oder ein Füllgut 122, das eine bestimmte Füllhöhe in dem Behälter aufweist und eine Füllgutoberfläche 124 besitzt. An der dem radiometrischen Füllstandmessgerät gegenüberliegenden Behälterwand ist außenseitig ein Sendeelement 120 angebracht. Das Sendeelement weist eine radioaktive Quelle auf, die Gammastrahlen 121 in Richtung des Behälters und insbesondere in Richtung des Füllstandmessgeräts, das an der gegenüberliegenden Behälteraußenwand angeordnet ist, aussendet. Je nach Ausführungsart kann das radiometrische Füllstandmessgerät der Grenzstanderfassung dienen, eine kontinuierliche Füllstandmessung ermöglichen, oder zur Dichte- oder Konzentrationsmessung des im Behälter befindlichen Füllguts ausgelegt sein.

In Fig. 2 ist ein detaillierter Aufbau eines radiometrischen Füllstandmessgeräts 100 schematisch gezeigt. Die von einer radioaktiven Quelle ausgesandten Signale werden zunächst in einem Szintillator 103 des Füllstandmessgeräts 100 erfasst und in diesem Szintillator in Lichtsignale umgewandelt. Der Szintillator kann an zwei Photonenzähler angeschlossen sein. Der erste Photonenzähler 101 kann beispielsweise als Photomultiplier ausgeführt sein. Ein solcher Photomultiplier kann die nötige Empfindlichkeit zur genauen Erfassung des durch den Szintillator erzeugten Lichtsignals aufweisen. Der zweite Photonenzähler 102 kann beispielsweise als "Avalanche-Photodiode" ausgelegt sein. Es sind allerdings auch andere Arten von Photonenzählern für den ersten oder den zweiten Photonenzähler vorstellbar. Beispielsweise können sowohl der erste als auch der zweite Photonenzähler als Photomultiplier ausgeführt sein. Dabei kann die Empfindlichkeit des ersten Photonenzählers 101 größer als die Empfindlichkeit des zweiten Photonenzählers 102 sein. Die Photonenzähler 101, 102 wandeln das durch den Szintillator 103 erzeugte Lichtsignal in ein elektrisches Messsignal um, das durch einen Vergleicher 104 erfasst wird. Der Vergleicher 104 ist dazu ausgelegt, die durch die Photonenzähler erzeugten Messsignale miteinander zu vergleichen. Dabei ist vorgesehen, dass erfindungsgemäß der zweite Photonenzähler eine geringere Empfindlichkeit aber dafür größere Temperaturstabilität besitzt. Unter einem Vergleich der durch den ersten Photonenzähler 101 und durch den zweiten Photonenzähler 102 erfassten Messsignale kann beispielsweise das Bilden des Verhältnisses der Signale zueinander verstanden werden. Ohne alterungs- oder temperaturbedingte Änderungen der Messsignale des ersten Photonenzählers 101 nimmt das Verhältnis der Messsignale beispielsweise einen vorgegebenen Sollwert an. Der Vergleicher kann derart ausgeführt sein, dass er, wenn das ermittelte Verhältnis nicht dem Sollwert entspricht, das Netzteil 105 des ersten Photonenzählers 101 ansteuert, um die Versorgungsspannung des ersten Photonenzählers 101 zu verändern. Das Netzteil 105 des ersten Photonenzählers 101 ist dazu beispielsweise mit einer Spannungsquelle 112 verbunden. Es kann vorgesehen sein, dass die Veränderung der Versorgungsspannung so lange durchgeführt wird, bis im Vergleich der durch den ersten und den zweiten Photonenzähler erzeugten Messsignale ein bestimmter Sollwert erhalten wird. Weiter weist das radiometrische Füllstandmessgerät ein zweites Netzteil 106 auf, das die Versorgungsspannung für den zweiten Photonenzähler 102 liefert. Das zweite Netzteil 106 kann dazu beispielsweise mit einer Spannungsquelle 113 verbunden sein.

Gemäß dem in Fig. 2 gezeigten Ausführungsbeispiel für ein radiometrisches Füllstandmessgerät kann das durch den ersten Photonenzähler 101 erzeugte Messsignal an eine Auswerteeinheit 111 übermittelt werden, sobald bei dem Vergleich des durch den ersten und den zweiten Photonenzähler erzeugten Messsignals durch den Vergleicher 104 ein bestimmter Sollwert erreicht ist. In Fig. 2 sind die Komponenten einer Auswerteeinheit 111 beispielhaft gezeigt. Demnach kann sich die Auswerteeinheit zusammensetzen aus zunächst einem Verstärker 107, der das durch den ersten Photonenzähler 101 erzeugte Messsignal empfängt und entsprechend verstärkt. Der Verstärker übermittelt das Signal an einen Komparator 108, der dieses wiederum an einen Mikrocontroller 109 weitergibt. Durch den Mikrocontroller 109 kann beispielsweise der Füllstand oder andere abzuleitende Größen wie eine Konzentrationsdichte des Füllguts im Behälter ermittelt werden. Die ermittelten Werte oder abgeleiteten Daten können an einer Anschlussstelle 110 zur Verfügung gestellt werden.

Es kann weiter vorgesehen sein, dass der Vergleicher 104 Daten an die Auswerteeinheit 111 übermittelt. In der in Fig. 2 beispielhaft dargestellten Ausführungsform der Auswerteeinheit 111 kann der Vergleicher 104 beispielsweise Daten an den Verstärker 107 übermitteln oder an den Komparator 108 oder den Mikrocontroller 109. Beispielsweise kann der Vergleicher 104 durch Ansteuern des Netzteils 105 die Versorgungsspannung des ersten Photonenzählers 101 so lange variieren, bis das Verhältnis der durch den ersten und den zweiten Photonenzähler ermittelten Messsignale einem Sollwert nahekommt, ohne diesen jedoch erreichen zu können. In diesem Fall kann aus dem erhaltenen Ist-Verhältnis der durch den ersten Photonenzähler 101 und den zweiten Photonenzähler 102 erzeugten Messsignale ein Korrekturfaktor abgeleitet werden, der der Auswerteeinheit 111 zur Verfügung gestellt wird. Diese kann daraufhin unter Berücksichtigung dieses Korrekturfaktors die durch den ersten Photonenzähler 101 erzeugten Messsignale auswerten. In einer solchen Ausführungsform kann damit vorteilhaft zunächst beispielsweise nur die Versorgungsspannung variiert werden. Wenn dies nicht ausreichen sollte, kann ein Korrekturfaktor ermittelt und bei der Auswertung des durch den ersten Photonenzähler erhaltenen Messsignals verwendet werden.

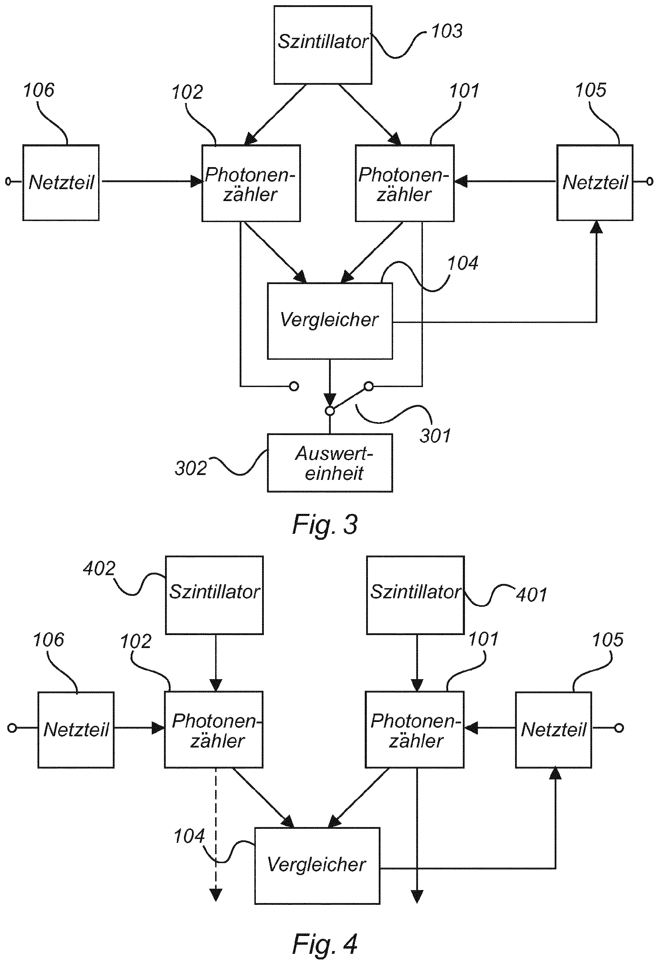

Fig. 3 zeigt ein weiteres Ausführungsbeispiel eines radiometrischen Füllstandmessgeräts, aufweisend einen Szintillator 103 sowie einen ersten Photonenzähler 101 und einen zweiten Photonenzähler 102, deren Messsignale jeweils einem Vergleicher 104 zugeführt werden, wobei der Vergleicher 104 beispielhaft zur Steuerung der Versorgungsspannung des ersten Photonenzählers, die durch ein erstes Netzteil 105 zur Verfügung gestellt wird, ausgelegt ist. Weiter weist das radiometrische Füllstandmessgerät ein zweites Netzteil 106 auf, das für die Stromversorgung des zweiten Photonenzählers 102 ausgelegt ist. Der Vergleicher 104 ist mit einem Schalter 301 verbunden. Der Schalter 301 weist zwei Schaltzustände auf, wobei im ersten Schaltzustand die durch den ersten Photonenzähler 101 erzeugten Messsignale einer Auswerteeinheit 302 zur Verfügung gestellt werden können. Im zweiten Schaltzustand des Schalters 301 können die durch den zweiten Photonenzähler erzeugten Messsignale an die Auswerteeinheit 302 übermittelt werden. Die Auswerteeinheit 302 kann beispielsweise in der Form der Auswerteeinheit 111 aufgebaut sein und die in Fig. 2 dargestellten Komponenten besitzen. Durch die in Fig. 3 dargestellte Ausführungsform kann beispielsweise ermöglicht werden, dass die durch den ersten Photonenzähler 101 erzeugten Messsignale nur dann der Auswerteeinheit 302 zur weiteren Auswertung und insbesondere Füllstandbestimmung zugeführt werden, wenn die von dem ersten Photonenzähler 101 erzeugten Messsignale einen bestimmten Gütewert besitzen. Der Gütewert kann durch den, durch den Vergleicher 104 durchgeführten, Vergleich mit den durch den zweiten Photonenzähler 102 erzeugten Messsignalen ermittelt werden. Unterschreiten die durch den ersten Photonenzähler 101 erzeugten Messsignale einen vorgegebenen Gütewert, so kann der Schalter 301 in seine zweite Position gebracht werden und die durch den zweiten Photonenzähler 102 erzeugten Messsignale werden der Auswerteeinheit 302 zur weiteren Auswertung zur Verfügung gestellt. Es kann vorgesehen sein, dass ein Umschalten des Schalters 301 zwischen den beiden Schalterpositionen manuell erfolgen kann, oder es kann vorgesehen sein, dass der Schalter, beispielsweise durch den Vergleicher, angesteuert und automatisch geschaltet werden kann. Auch eine Kombination der beiden vorgenannten Optionen ist möglich. Beispielsweise ist es vorstellbar, dass der Vergleicher 104 bei Feststellung einer Fehlfunktion des ersten Photonenzählers 101 den Schalter 301 automatisch ansteuert und veranlasst, dass dieser in die zweite Position gebracht wird, in der die Messdaten des zweiten Photonenzählers 102 der Auswerteeinheit zugeführt werden können. Auf diese Art und Weise kann beispielsweise bei einem Ausfall oder einer Fehlfunktion des ersten Photonenzählers 101 sichergestellt werden, dass weiterhin eine Füllstandmessung auf Basis der durch den zweiten Photonenzähler 102 erzeugten Messsignale möglich ist. Auch wenn beispielsweise die Messgenauigkeit bzw. Empfindsamkeit des zweiten Photonenzählers 102 geringer ausgelegt ist als die des ersten Photonenzählers 101, kann damit beispielsweise bei einem Ausfall des ersten Photonenzählers dennoch sichergestellt werden, dass eine Füllstandmessung, wenn auch weniger genau, möglich ist. In diesem Fall kommt es damit in vorteilhafter Weise nicht zu einem kompletten Ausfall des radiometrischen Füllstandmessgeräts.

In Fig. 4 ist eine Teilansicht eines radiometrischen Füllstandmessgeräts 100 gemäß einem weiteren Ausführungsbeispiel gezeigt. In diesem Beispiel sind zwei Szintillatoren 401 und 402 vorgesehen. Die im ersten Szintillator 401 erzeugten Lichtsignale werden durch einen ersten Photonenzähler 101 erfasst und in Messsignale umgewandelt, die einem Vergleicher 104 zugeführt werden. In ähnlicher Weise werden die im zweiten Szintillator 402 erzeugten Lichtsignale einem zweiten Photonenzähler 102 zugeführt. Aus diesen Lichtsignalen erzeugt der zweite Photonenzähler 102 Messsignale, die wiederum dem Vergleicher 104 zugeführt werden. Der Vergleicher 104 kann eine Steuerungsvorrichtung für ein Netzteil 105, das den ersten Photonenzähler 101 mit Spannung versorgt, aufweisen. Die weiteren Komponenten des in Fig. 4 dargestellten radiometrischen Füllstandmessgeräts können beispielsweise gemäß den oben und/oder im Folgenden beschriebenen Ausführungsformen ausgelegt sein.

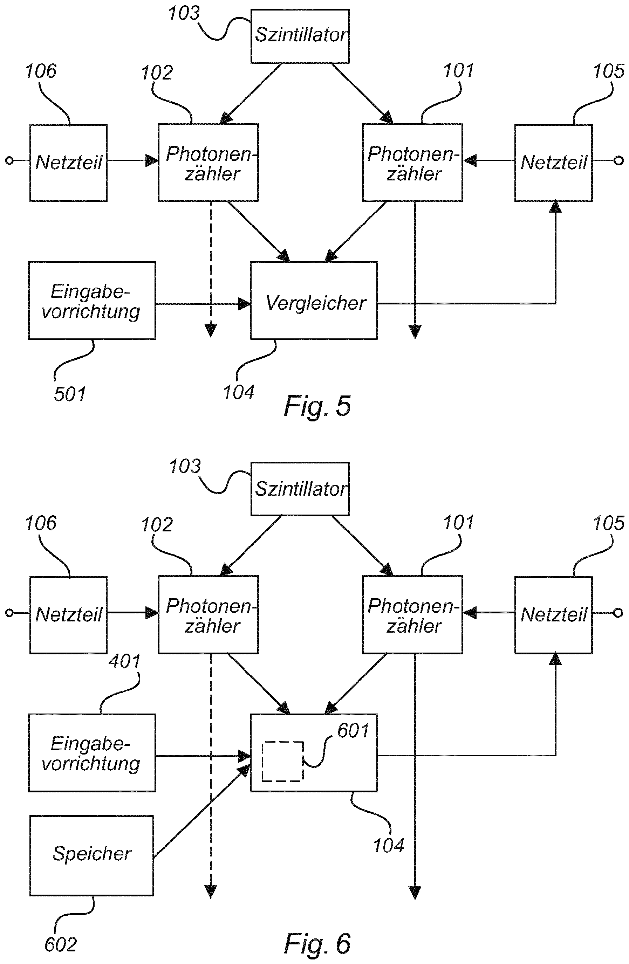

In Fig. 5 ist ein weiteres Ausführungsbeispiel für ein radiometrisches Füllstandmessgerät 100 gezeigt. Dabei handelt es sich wiederum um ein Detail des Füllstandmessgeräts. Dargestellt ist ein Szintillator 103, dessen Lichtsignale durch einen ersten Photonenzähler 101 und einen zweiten Photonenzähler 102 empfangen werden. Diese Photonenzähler erzeugen aufgrund des empfangenen Lichtsignals ein Messsignal, das wiederum jeweils einem Vergleicher 104 zugeführt wird. Gemäß dem in Fig. 5 gezeigten Ausführungsbeispiel weist der Vergleicher zusätzlich eine Eingabevorrichtung 501 auf. Der Vergleicher 104 vergleicht die erzeugten Messsignale des ersten und zweiten Photonenzählers. Durch die Eingabevorrichtung kann ein bestimmter Sollwert, der bei diesem Vergleich erhalten werden soll, eingegeben werden. Es kann auch vorgesehen sein, dass ein bestimmtes Intervall eingegeben werden kann, innerhalb dessen der Istwert, der durch den Vergleicher 104 ermittelt wird, zu liegen kommen soll. Weiter kann der Vergleicher 104 dazu ausgelegt sein, das Netzteil 105 des ersten Photonenzählers 101 anzusteuern und das Netzteil 105 zu veranlassen, die Versorgungsspannung des ersten Photonenzählers 101 so lange zu verändern, bis der durch den Vergleicher bestimmte Istwert innerhalb eines zuvor in die Eingabevorrichtung eingegebenen oder anderweitig festgelegten Intervalls zu liegen kommt. Anschließend kann das durch den ersten Photonenzähler 101 erzeugte Messsignal beispielsweise gemäß einem oben und/oder im Folgenden beschriebenen Ausführungsbeispiel an eine Auswerteeinheit übermittelt werden. Es kann auch vorgesehen sein, dass das Füllstandmessgerät in Fig. 5 einen in Fig. 3 gezeigten Schalter aufweist, so dass bei entsprechender Schalterstellung beispielsweise auch die durch den zweiten Photonenzähler erzeugten Messsignale an die Auswerteeinheit übermittelt werden.

In Fig. 6 ist, wie auch in Fig. 5, ein Detail eines radiometrischen Füllstandmessgeräts 100 gezeigt. Zusätzlich zu den in Fig. 5 dargestellten Komponenten weist das Füllstandmessgerät der Fig. 6 einen Speicher 602 auf, der mit dem Vergleicher 104 verbunden ist. Es kann auch vorgesehen sein, dass der Vergleicher 104 einen internen Speicher 601 besitzt. In dem Speicher 602 oder dem internen Speicher 601 kann beispielsweise eine Temperaturkennlinie einer Photodiode hinterlegt sein. In diesem Fall kann bei bekannten Betriebsbedingungen, also beispielsweise bekannter Betriebstemperatur, eine Eingabemöglichkeit der Betriebstemperatur in die Eingabevorrichtung 401 vorgesehen sein. In diesem Fall kann der Vergleicher 104 auf die im Speicher 602 oder im Speicher 601 hinterlegte Temperaturkennlinie einer Photodiode zurückgreifen, die beispielsweise als der erste Photonenzähler 101 oder als der zweite Photonenzähler 102 im radiometrischen Füllstandmessgerät zum Einsatz kommt. Dadurch können temperaturbedingte Änderungen eines jeweils erzeugten Messsignals in vorteilhafter Weise berücksichtigt werden.

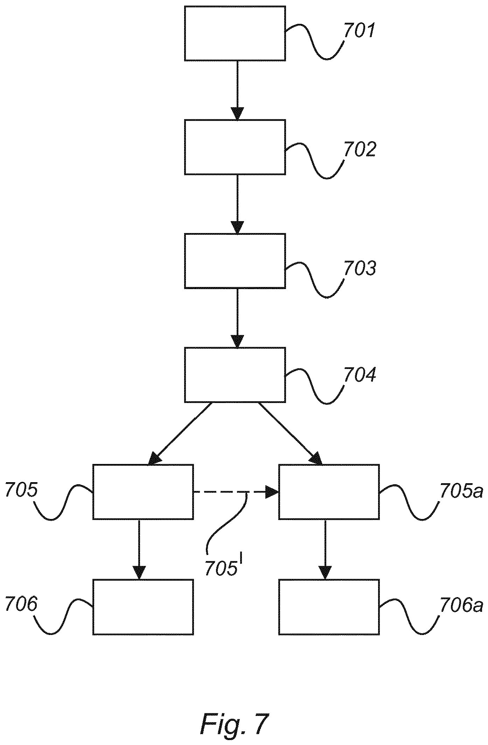

In Fig. 7 ist ein Flussdiagramm gezeigt, das das Verfahren veranschaulicht, mittels dessen eine radiometrische Füllstandmessung mit einem oben und/oder im Folgenden beschriebenen Füllstandmessgerät durchgeführt werden kann. Das Verfahren basiert auf den im Folgenden beschriebenen Schritten. Im ersten Schritt 701 wird ein Signal durch eine radioaktive Sendeeinheit ausgesandt. Dieses Signal wird im zweiten Schritt 702 durch eine Szintillatoranordnung eines radiometrischen Füllstandmessgeräts 100 empfangen. Bei der Szintillatoranordnung kann es sich beispielsweise um einen Szintillator handeln. Es kann aber auch vorgesehen sein, dass das radiometrische Füllstandmessgerät zwei Szintillatoren aufweist, die jeweils ein Signal empfangen. Im Szintillator oder in den Szintillatoren kommt es aufgrund des empfangenen Signals zur Erzeugung eines Lichtsignals. Dieses Lichtsignal wird im nächsten Schritt 703 an zwei Photonenzähler übermittelt, die aus dem empfangenen Lichtsignal ein elektrisches Messsignal erzeugen. Die durch den ersten Photonenzähler 101 und den zweiten Photonenzähler 102 erzeugten Messsignale werden im folgenden Schritt 704 einem Vergleicher 104 zugeführt und durch diesen miteinander verglichen. Auf Grundlage dieses Vergleichs wird in den folgenden Schritten des Verfahrens eine Auswertung des durch den ersten Photonenzähler erzeugten Messsignals durchgeführt. Dabei existieren unterschiedliche Möglichkeiten der Auswertung.

Die erste Möglichkeit besteht darin, im Schritt 705 die Versorgungsspannung des ersten Photonenzählers 101 zu variieren, um einen Temperatureffekt oder einen Alterungseffekt, der bei dem Vergleich der Messsignale in Schritt 704 festgestellt wurde, zu kompensieren. Anschließend kann in Schritt 706 die Auswertung des durch den ersten Photonenzähler 101 erfassten Messsignals durch eine Auswerteeinheit durchgeführt werden.

Alternativ kann auf den Schritt 704 der Schritt 705a folgen, in dem auf Basis des Vergleichs der durch den ersten Photonenzähler und den zweiten Photonenzähler ermittelten Messsignale ein Korrekturfaktor ermittelt wird. Dieser Korrekturfaktor wird an eine Auswerteeinheit übergeben. In Schritt 706a wird dann das durch den ersten Photonenzähler 101 erzeugte Messsignal unter Berücksichtigung des Korrekturfaktors ausgewertet.

Eine dritte Möglichkeit eines Auswerteverfahrens besteht darin, dass von Schritt 704 ausgehend zunächst in Schritt 705 die Versorgungsspannung des ersten Photonenzählers variiert wird. Konnte die Versorgungsspannung nicht in einer solchen Art geändert werden, dass ein Sollwert bei dem Vergleich der durch den ersten und den zweiten Photonenzähler erzeugten Messsignale erzielt wurde, so kann in Schritt 705' ein Korrekturfaktor ermittelt werden und wiederum an die Auswerteeinheit übergeben werden. Auf Basis dessen wird wiederum in Schritt 706a unter Berücksichtigung des in Schritt 705' ermittelten Korrekturfaktors die Auswertung des durch den ersten Photonenzähler erzeugten Messsignals durchgeführt. Die zuletzt beschriebene Möglichkeit der Auswertung kann vorgesehen sein, wenn durch eine Variation der Versorgungsspannung des ersten Photonenzählers keine Übereinstimmung der durch den ersten und den zweiten Photonenzähler erzeugten Messsignale erzielt werden kann bzw. wenn der Istwert des Vergleichs der erzeugten Messsignale nicht in ein Sollintervall fällt. In diesem Fall kann ein verbleibender Korrekturfaktor ermittelt werden, der die verbleibende Abweichung in den Messsignalen ausdrückt bzw. widerspiegelt. Dieser Korrekturfaktor wird dann zur Berücksichtigung in der weiteren Auswertung an die Auswerteeinheit übergeben.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer, oben beschriebener Ausführungsbeispiele verwendet werden können. Bezugszeichen in den Ansprüchen sind nicht als Einschränkungen anzusehen.

## Patentansprüche

1. Füllstandmessgerät (100) zur radiometrischen Füllstandmessung aufweisend:
einen ersten Photonenzähler (101);
einen zweiten Photonenzähler (102), der eine geringere Empfindlichkeit und eine größere Temperaturstabilität aufweist als der erste Photonenzähler;
einen Vergleicher (104) und
eine Auswerteeinheit (111, 302);
ein Netzteil (105);
eine Steuereinheit (104, 109);
wobei das Netzteil (105) zum Bereitstellen der Versorgungsspannung des ersten Photonenzählers (101) ausgeführt ist;
wobei der Vergleicher (104) zum Vergleich der mit dem ersten und dem zweiten Photonenzähler (101, 102) erzeugten Messsignale ausgeführt ist, um eine alterungsbedingte oder temperaturbedingte Änderung der von dem ersten Photonenzähler (101) erzeugten Messsignale festzustellen;
wobei die Auswerteeinheit (111, 302) zum Auswerten der durch den ersten Photonenzähler (101) erzeugten Messsignale unter Berücksichtigung der festgestellten alterungsbedingten oder temperaturbedingten Änderung ausgeführt ist,
wobei entweder der Vergleicher einen Korrekturfaktor für den ersten Photonenzähler ermittelt und das Auswerten durch die Auswerteeinheit unter Berücksichtigung des Korrekturfaktors durchgeführt wird; oder
wobei die Steuereinheit (104, 109) dazu ausgeführt ist, die durch das Netzteil (105) bereitgestellte Versorgungsspannung des ersten Photonenzählers (101) zu ändern, wenn eine alterungsbedingte oder temperaturbedingte Änderung festgestellt wurde, um die Änderung zu kompensieren.

2. Füllstandmessgerät nach Anspruch 1,
wobei der zweite Photonenzähler (102) temperaturstabil ist.

3. Füllstandmessgerät nach einem der vorhergehenden Ansprüche,
wobei der erste Photonenzähler (101) ein Photomultiplier ist.

4. Füllstandmessgerät nach einem der vorhergehenden Ansprüche,
wobei der zweite Photonenzähler (102) eine Avalanche-Photodiode ist.

5. Füllstandmessgerät nach einem der vorhergehenden Ansprüche, aufweisend:
eine Szintillatoranordnung (401, 402) welche zwei Szintillatoren (401, 402) aufweist;
wobei der erste Photonenzähler (101) Lichtsignale des ersten Szintillators (401) empfängt;
wobei der zweite Photonenzähler (102) Lichtsignale des zweiten Szintillators (402) empfängt.

6. Füllstandmessgerät nach einem der Ansprüche 1 - 4, aufweisend:
eine Szintillatoranordnung (103) welche einen Szintillator (103) aufweist;
wobei der erste und der zweite Photonenzähler (101, 102) Lichtsignale des einen Szintillators (103) empfangen.

7. Füllstandmessgerät nach einem der Ansprüche 1 - 6,
wobei der Vergleicher (104) dazu ausgeführt ist, ausgehend von dem Ergebnis des Vergleichs der durch den ersten und den zweiten Photonenzähler (101, 102) erfassten Messsignale, einen Korrekturfaktor für die Auswertung der von dem ersten Photonenzähler (101) erzeugten Messsignale zu ermitteln;
wobei der Vergleicher (104) dazu ausgeführt ist, den Korrekturfaktor an die Auswerteeinheit (111, 302) zu übermitteln.

8. Verfahren zur radiometrischen Füllstandmessung, aufweisend die Schritte:
Empfangen eines von einer radioaktiven Quelle ausgesendeten Signals durch eine Szintillatoranordnung (702);
Empfangen von Lichtsignalen der Szintillatoranordnung durch einen ersten Photonenzähler und durch einen zweiten Photonenzähler (703);
Vergleich der durch den ersten und den zweiten Photonenzähler erzeugten Messsignale, um eine alterungsbedingte oder temperaturbedingte Änderung der von dem ersten Photonenzähler erzeugten Messignale festzustellen (704);
Auswerten der durch den ersten Photonenzähler erzeugten Messsignale unter Berücksichtigung der festgestellten altersbedingten oder temperaturbedingten Änderung
wobei entweder ein Korrekturfaktor für den ersten Photonenzähler ermittelt wird und das Auswerten durch die Auswerteeinheit unter Berücksichtigung des Korrekturfaktors durchgeführt wird; oder
wobei die durch ein Netzteil (105) bereitgestellte Versorgungsspannung des ersten Photonenzählers (101) geändert wird, wenn eine alterungsbedingte oder temperaturbedingte Änderung festgestellt wurde, um die Änderung zu kompensieren.

9. Verfahren zur radiometrischen Füllstandmessung nach Anspruch 8,
wobei die Szintillatoranordnung einen ersten und einen zweiten Szintillator aufweist und der erste und der zweite Szintillator die Signale einer radioaktiven Quelle empfangen;
wobei der erste Photonenzähler Lichtsignale des ersten Szintillators empfängt; und
wobei der zweite Photonenzähler Lichtsignale des zweiten Szintillators empfängt.

10. Verfahren nach Anspruch 8 oder 9,
wobei die Auswertung der durch den ersten Photonenzähler erzeugten Messsignale unter Berücksichtigung der festgestellten altersbedingten oder temperaturbedingten Änderung die folgenden Schritte aufweist:
Änderung der durch ein Netzteil bereitgestellten Versorgungsspannung des ersten Photonenzählers, bis die Messsignale, die durch den ersten und den zweiten Photonenzähler erzeugt werden, übereinstimmen, einen bestimmten Sollwert oder ein bestimmtes Verhältnis zueinander annehmen oder innerhalb eines bestimmten vorgegebenen Intervalls liegen (705);
Auswerten der durch den ersten Photonenzähler erzeugten Messsignale durch eine Auswerteeinheit (706).

11. Verfahren nach Anspruch 8 oder 9,
wobei die Auswertung der durch den ersten Photonenzähler erzeugten Messsignale unter Berücksichtigung der festgestellten altersbedingten oder temperaturbedingten Änderung die folgenden Schritte aufweist:
Ermitteln eines Korrekturfaktors für die durch den ersten Photonenzähler erzeugten Messsignale, basierend auf dem Vergleich der durch den ersten und den zweiten Photonenzähler erzeugten Messsignale (705a);
Übermitteln des Korrekturfaktors an eine Auswerteeinheit;
Auswerten der durch den ersten Photonenzähler erzeugten Messsignale unter Berücksichtigung des Korrekturfaktors durch die Auswerteeinheit (706a).

12. Ein Programmelement, das, wenn es auf einem Prozessor eines Füllstandmessgeräts ausgeführt wird, das Füllstandmessgerät anleitet, die Schritte nach Anspruch 8 durchzuführen.

13. Computerlesbares Medium, auf dem ein Programmelement nach Anspruch 12 gespeichert ist.

## Claims

1. Fill level measurement device (100) for radiometrically measuring a fill level, comprising:
a first photon counter (101);
a second photon counter (102), which comprises a lower sensitivity and a higher temperature stability than the first photo counter ;
a comparator (104), and
an evaluation unit (111, 302);
a power supply unit (105);
a control unit (104, 109);
wherein the power supply unit (105) is configured to provide the supply voltage to the first photon counter (101);
wherein the comparator (104) is configured to compare the measurement signals generated by the first photon counter and the second photon counter (101, 102) in order to detect a change, caused by aging or temperature, in the measurement signals generated by the first photon counter (101); and
wherein the evaluation unit (111, 302) is configured to evaluate the measurement signals generated by the first photon counter (101), taking into account the detected change caused by aging or temperature;
wherein either the comparator determines a correction factor for the first photon counter and the evaluation is carried out by the evaluation unit by taking into account the correction factor; or
wherein the control unit (104, 109) is configured to alter the supply voltage to the first photon counter (101) that is provided by the power supply unit (105), when a change caused by aging or temperature is detected, in order to compensate for the change.

2. Fill level measurement device according to claim 1,
wherein the second photon counter (102) is temperature-stable.

3. Fill level measurement device according to one of the preceding claims,
wherein the first photon counter (101) is a photomultiplier.

4. Fill level measurement device according to one of the preceding claims,
wherein the second photo counter (102) is an avalanche photodiode.

5. Fill level measurement device according to one of the preceding claims, comprising:
a scintillator arrangement (401, 402) comprising two scintillators (401, 402);
wherein the first photon counter (101) receives light signals from the first scintillator (401);
wherein the second photon counter (102) receives light signals from the second scintillator (402).

6. Fill level measurement device according to one of claims 1-4, comprising:
a scintillator arrangement (103) which comprises a scintillator (103);
wherein the first and second photon counters (101, 102) receive light signals from the scintillator (103).

7. Fill level measurement device according to one of claims 1-6, wherein the comparator (104) is configured to determine a correction factor for evaluating the measurement signals generated by the first photon counter (101), on the basis of the result of the comparison of the measurement signals recorded by the first and the second photon counter (101, 102);
wherein the comparator (104) is configured to transmit the correction factor to the evaluation unit (111, 302).

8. Method for radiometrically measuring a fill level, comprising the steps of:
receiving a signal emitted by a radioactive source by using a scintillator arrangement (702);
receiving light signals from the scintillator arrangement using a first photon counter and a second photon counter (703);
comparing the measurement signals generated by the first photon counter and the second photon counter in order to detect a change, caused by aging or temperature, in the measurement signals generated by the first photon counter (704);
evaluating the measurement signals generated by the first photon counter, taking into account the detected change caused by aging or temperature;
wherein either a correction factor for the first photon counter is determined and the evaluation is carried out by the evaluation unit by taking into account the correction factor; or
wherein the supply voltage of the first photon counter, that is provided by the power supply unit (105), is altered, when a change caused by aging or temperature is detected, in order to compensate for the change.

9. Method for radiometrically measuring a fill level according to claim 8,
wherein the scintillator arrangement comprises a first scintillator and a second scintillator, and the first and the second scintillators receive the signals from a radioactive source;
wherein the first photon counter receives light signals from the first scintillator; and
wherein the second photon counter receives light signals from the second scintillator.

10. Method according to claim 8 or 9,
wherein the evaluation of the measurement signals generated by the first photon counter, taking into account the detected change caused by aging or temperature, comprises the following steps of:
altering the supply voltage, that is provided by the power supply unit, of the first photon counter until the measurement signals generated by the first and the second photon counters correspond, assume a certain target value or a certain ratio to one another or are within a certain predefined interval (705);
evaluating the measurement signals generated by the first photon counter by using an evaluation unit (706).

11. Method according to claim 8 or 9,
wherein the evaluation of the measurement signals generated by the first photon counter, taking into account the detected change caused by aging or temperature, comprises the following steps of:
determining a correction factor for the measurement signals that are generated by the first photon counter on the basis of the comparison of the measurement signals generated by the first and the second photon counter (705a);
transmitting the correction factor to an evaluation unit;
evaluating the measurement signals generated by the first photon counter, taking into account the correction factor, by using the evaluation unit (706a).

12. A program element which, when executed on a processor of a fill level measurement device, instructs the fill level measurement device to carry out the steps according to claim 8.

13. Computer-readable medium on which a program element according to claim 12 is stored, .

## Revendications

1. Appareil de mesure de niveau de remplissage (100) pour une mesure radiométrique de niveau de remplissage comprenant:
un premier compteur de photons (101),
un deuxième compteur de photons (102) qui a une sensibilité plus faible et une stabilité de température plus grande que le premier compteur de photons,
un comparateur (104) et
une unité d'évaluation (111, 302),
une unité d'alimentation (105);
une unité de contrôle (104, 109);
l'unité d'alimentation (105) étant adaptée pour fournir la tension d'alimentation du premier compteur de photons (101),
le comparateur (104) étant adapté pour comparer les signaux de mesure générés par les premier et deuxième compteur de photons (101, 102), afin de déterminer un changement lié au vieillissement ou à la température dans les signaux de mesure générés par le premier compteur de photons (101),
dans lequel l'unité d'évaluation (111, 302) pour évaluer les signaux de mesure générés par le premier compteur de photons (101) en tenant compte du changement déterminé lié au vieillissement ou à la température est exécutée,
dans lequel soit la comparaison détermine un facteur de correction pour le premier compteur de photons et l'évaluation est effectuée par l'unité d'évaluation en tenant compte du facteur de correction, soit
l'unité de commande (104, 109) est configurée pour modifier la tension d'alimentation du premier compteur de photons (101) fournie par l'unité d'alimentation (105) lorsqu'un changement lié au vieillissement ou à la température a été détecté afin de compenser le changement.

2. Appareil de mesure de niveau de remplissage (100) selon la revendication 1, dans lequel le deuxième compteur de photons (102) est stable en température.

3. Appareil de mesure de niveau de remplissage (100) selon l'une quelconque des revendications précédentes,
dans lequel le premier compteur de photons (101) est un photomultiplicateur.

4. Appareil de mesure de niveau de remplissage (100) selon l'une quelconque des revendications précédentes,
dans lequel le deuxième compteur de photons (102) est une photodiode à avalanche.

5. Appareil de mesure de niveau de remplissage (100) selon l'une quelconque des revendications précédentes, comprenant:
un ensemble de scintillateurs (401, 402) comprenant deux scintillateurs (401, 402),
le premier compteur de photons (101) recevant des signaux lumineux du premier scintillateur (401);
le deuxième compteur de photons (102) recevant des signaux lumineux du deuxième scintillateur (402).

6. Appareil de mesure de niveau de remplissage (100) selon l'une quelconque des revendications 1 à 4, comprenant:
un ensemble de scintillateur (103) comprenant un scintillateur (103),
dans lequel le premier et le deuxième compteur de photons (101, 102) reçoivent des signaux lumineux du scintillateur (103).

7. Appareil de mesure de niveau de remplissage (100) selon l'une quelconque des revendications 1 à 6,
dans lequel le comparateur (104) est configuré afin de, à partir du résultat de la comparaison des signaux de mesure détectés par le premier et le deuxième compteur de photos (101, 102), déterminer un facteur de correction pour l'évaluation des signaux de mesure générés par le premier compteur de photons (101),
dans lequel le comparateur (104) est configuré pour transmettre le facteur de correction à l'unité d'évaluation (111, 302).

8. Méthode de mesure radiométrique de niveau de remplissage, comprenant les étapes suivantes :
Réception d'un signal émis par une source radio active par un ensemble scintillateur (702);
réception des signaux lumineux de l'ensemble scintillateur par un premier compteur de photons et par un deuxième compteur de photons (703);
comparaison des signaux de mesure générés par le premier et le deuxième compteur de photons afin de détecter une modification des signaux de mesure générés par le premier compteur de photons due au vieillissement ou à la température (704);
évaluation des signaux de mesure générés par le premier compteur de photons en tenant compte de la variation détectée liée au vieillissement ou à la température,
dans laquelle soit un facteur de correction est déterminé pour le premier compteur de photons et l'évaluation est effectuée par l'unité d'évaluation en tenant compte du facteur de correction, soit la tension d'alimentation du premier compteur de photons (101), qui est fournie par une unité d'alimentation (105), est modifiée si une variation liée au vieillissement ou à la température a été détectée afin de compenser la variation.

9. Méthode de mesure radiométrique de niveau de remplissage selon la revendication 8,
dans laquelle ledit ensemble de scintillateurs comprend un premier et un deuxième scintillateur, le premier et le deuxième scintillateur recevant des signaux d'une source radioactive;
le premier compteur de photons recevant des signaux lumineux du premier scintillateur, et
le deuxième compteur de photons recevant des signaux lumineux du deuxième scintillateur.

10. Méthode selon la revendication 8 ou 9,
dans laquelle l'évaluation des signaux de mesure générés par le premier compteur de photons, en tenant compte de la variation détectée liée au vieillissement ou à la température, comprend les étapes suivantes:
modification de la tension d'alimentation du premier compteur de photons, fournie par une unité d'alimentation, jusqu'à ce que les signaux de mesure générés par le premier et le deuxième compteur de photons coïncident, prennent une valeur de consigne spécifique ou un rapport spécifique l'un par rapport à l'autre ou se situent dans un intervalle prédéterminé spécifique (705);
évaluation des signaux de mesure générés par le premier compteur de photons par une unité d'évaluation (706).

11. Méthode selon la revendication 8 ou 9,
dans laquelle l'évaluation des signaux de mesure générés par le premier compteur de photons, en tenant compte du changement détecté lié au vieillissement ou à la température, comprend les étapes suivantes:
déterminer un facteur de correction pour les signaux de mesure générés par le premier compteur de photons sur la base de la comparaison des signaux de mesure générés par les premier et deuxième compteurs de photons (705a),
transmission du facteur de correction à une unité d'évaluation,
évaluation des signaux de mesure générés par le premier compteur de photons, en tenant compte du facteur de correction par l'unité d'évaluation (706a).

12. Un élément de programme qui, lorsqu'il est exécuté sur un processeur d'un appareil de mesure de niveau de remplissage, instruit l'appareil de mesure de niveau de remplissage d'exécuter les étapes selon la revendication 8.

13. Support lisible par ordinateur sur lequel est stocké un élément de programme selon la revendication 12.
